Europäisches Patentamt

**European Patent Office**

**Office européen des brevets**

(11) Numéro de publication: **0 354 095 B1**

# FASCICULE DE BREVET EUROPEEN

(45) Date de publication de fascicule du brevet: **01.12.93**  (51) Int. Cl.⁵: **H02P 5/418**, D06F 37/30

(21) Numéro de dépôt: **89402108.8**

(22) Date de dépôt: **25.07.89**

(54) **Chaîne de régulation de la vitesse d'un tambour de machine à laver.**

(30) Priorité: **29.07.88 FR 8810241**

(43) Date de publication de la demande:
**07.02.90 Bulletin  90/06**

(45) Mention de la délivrance du brevet:
**01.12.93 Bulletin  93/48**

(84) Etats contractants désignés:
**DE GB IT**

(56) Documents cités:
**EP-A- 0 140 424**
**FR-A- 2 611 097**

**PATENT ABSTRACTS OF JAPAN, vol. 6, no. 79 (P-115)(957), 18 mai 1982; & JP-A- 57 017025 (JIDOUSHIYA DENKI KOGYO K.K.) 28.01.1982**

(73) Titulaire: **SEXTANT AVIONIOUE S.A.**
**5/7 rue Jeanne Braconnier**
**Parc Tertiaire**
**F-92366 Meudon la Forêt Cédex(FR)**

(72) Inventeur: **Girardin, Denis**
**Rue du Battoir**
**Alixan**
**F-26300 Bourg-de-Peage(FR)**
Inventeur: **Purson, Hervé**
**10 Le Faubourg**
**Alixan**
**F-26300 Bourg-de-Peage(FR)**
Inventeur: **Tardy, Lionel**
**Ouartier La Liège**
**Barcelonne**
**F-26120 Chabeuil(FR)**

(74) Mandataire: **Bloch, Gérard et al**
**2, square de l'Avenue du Bois**
**F-75116 Paris (FR)**

EP 0 354 095 B1

**Description**

La présente invention concerne une chaîne de régulation de la vitesse d'un tambour de machine à laver le linge, entraîné par un moteur de type série comprenant un stator dont le circuit d'alimentation en tension comporte des moyens de commutation, comprenant des moyens, entraînés par le moteur, pour fournir un signal de période T' inversement proportionnelle à la vitesse du moteur, des moyens pour déterminer et normer l'écart entre ladite période T′ et une période de consigne T et des moyens de régulation fournissant, en réponse à l'écart normé $\epsilon_N$, un signal de commande desdits moyens de commutation

Le tambour d'une machine à laver le linge peut être entraîné par un moteur synchrone, associé à un jeu de condensateurs pour en faire varier la vitesse. Cette solution ne permet que peu de vitesses différentes, généralement trois, et c'est un inconvénient notamment pour l'essorage.

Le tambour peut donc aussi, et de façon préférée, être entraîné par un moteur universel de type série, comprenant un rotor et un stator, ou inducteur, en série, avec des balais frottant sur un collecteur. Le moteur entraîne par ailleurs une génératrice tachymétrique, ou tachymètre, fournissant une tension dont la fréquence dépend de la vitesse du moteur. Le moteur est alimenté en tension alternative a partir du secteur, à toute la tension du secteur correspondant une vitesse du moteur déterminée par ses caractéristiques.

La fréquence tachymétrique est comparée à une fréquence de consigne, correspondant à la vitesse moteur désirée, dans un module analogique de régulation qui détermine la durée pendant laquelle, à chaque alternance, la tension secteur doit être appliquée au moteur pour qu'il tourne à la vitesse désirée.

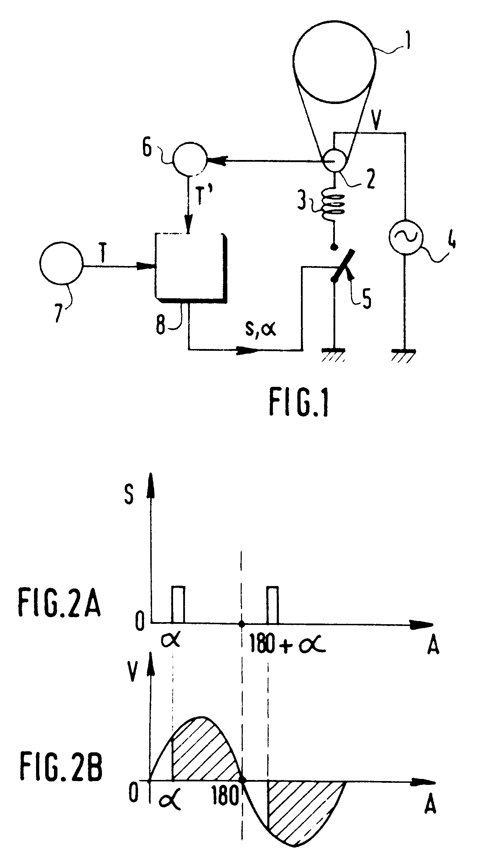

En d'autres termes, et en référence a la fière 1 qui représente schématiqnement une chaîne de régulation de la vitesse de rotation d'un tambour de machine à laver le linge, le tambour est entraîné par le rotor du moteur, en série avec son inducteur, alimenté sons la tension du secteur, par l'intermédiaire d'un interrupteur, en série avec le moteur. Le moteur entraîne le tachymètre, dont la tension de sortie a une période T' qui est comparée à la période T de la consigne dans le module analogiqne de régulation qui fournit, à partir de l'écart $\epsilon = $ T'-T le signal de régulation impulsionnel S de la figure 2A, avec des impulsions décalées, par rapport aux origines des demi-périodes de la tension secteur V, en fonction de l'angle de phase A, de la figure 2B, d'une durée ou d'un angle $\alpha$, compris entre 0 et 180°.

Le signal S commande l'interrupteur pour ne mettre le moteur sous tension que pendant sensiblement les portions $\pi - \alpha$ des alternances, positives et négatives, de la tension secteur V, chaque impulsion du signal S fermant le circuit de mise sous tension du moteur. L'interrupteur s'ouvre à chaque passage à zéro de l'intensité qui le traverse. Il s'agit généralement d'un triac ou d'un thyristor.

On conçoit facilement que la régulation du tambour ne soit optimale que pour une seule vitesse, correspondant à la fonction de transfert, unique, du modèle de régulation.

Or l'écart $\epsilon = $ T'-T peut varier dans une plage étendue : à grande vitesse T' est inférieure à 1 ms alors qu'à basse vitesse l'ordre de grandeur de T' est 30 ou 40 ms.

Aussi a-t-on déjà proposé de réguler la vitesse, d'une part, par un module numérique comme dans le document EP-A-0 140 424 et, d'autre part, de normer l'écart d'entrée du module de régulation pour qu'il soit toujours du même ordre de grandeur, et donc de réguler à partir de $\epsilon_N = \epsilon$N, produit de la multiplication de $\epsilon$ par N.

Disposant du facteur multiplicateur de normage N, le module de régulation numérique en tire $\alpha$, de tables préétablies et considérées en combinaison, et relatives par exemple à une régulation intégrale et à une régulation proportionnelle, bien connues de l'homme de métier.

Ce type de régulation présente toutefois certains inconvénients.

Le premier inconvénient est lié au mode de normage par multiplication qui est une opération toujours assez lourde.

Le deuxième inconvénient est lié au fait que l'écart $\epsilon_N$,qui varie quand même un peu, varie de façon continue alors que les tables ne contiennent que des valeurs discrètes. Il en résulte un manque de précision.

Le troisième inconvénient est la place que prennent les tables.

Enfin, la lenteur de la régulation peut constituer le quatrième inconvénient. Cette mauvaise dynamique résulte du fait que les tables sont bornées; quand la valeur effective de $\epsilon_N$ dépasse de beaucoup celle correspondant aux bornes des tables, on est obligé d'incrémenter la correction jusqu'à ce que $\epsilon_N$ redevienne égale à une valeur prise en compte dans les tables,

La présente invention vise donc à pallier tous ces inconvénients.

A cet effet, la présente invention concerne une chaîne de régulation du type mentionné ci-dessus, caractérisée par le fait que lesdits moyens de normage contiennent des moyens de stockage d'une période de référence $T_{ref}$, des moyens de création d'une fenêtre NT′ de réception du signal des moyens entraînés par le moteur, par comparaison avec la période de référence $T_{ref}$, des moyens de création d'une fenêtre d'émission de consigne $M_cT$, par comparaison avec la période de référence $T_{ref}$, des moyens de détermination de l'écart normé $\epsilon_N$ entre les deux fenêtres, et des moyens pour valider l'envoi, sur les moyens de régulation, de l'écart normé $\epsilon_N$ et comparer les deux facteurs multiplicateurs de normage N, $N_c$ et, lorsqu'ils sont différents, envoyer sur les moyens de régulation un écart maximum $\epsilon_{max}$ prédéterminé, N et Nc étant des nombres entiers.

De préférence, les moyens de création de la fenêtre de réception NT' comprennent un registre agencé pour compter N fronts du signal de période T', un comparateur recevant sur ses entrées la valeur $T_{ref}$ et la largeur de la fenêtre NT' et relié, par sa sortie, à l'entrée d'incrémentation d'une mémoire de stockage du facteur N, et les moyens de création de la fenêtre d'émission de consigne $N_cT$ comprennent deux comparateurs, recevant l'un, sur son entrée positive, l'autre, sur son entrée négative, la valeur de la période de consigne T et, sur leurs autres entrées, respectivement la valeur

$$\frac{T_{ref}}{N_c} \quad et \quad \frac{T_{ref}}{N_c - 1} \, ,$$

et dont les sorties sont reliées respectivement aux deux entrées d'une porte NAND, dont la sortie est reliée à un compteur lui-même relié, par sa sortie, à l'entrée d'incrémentation d'une mémoire de stockage du facteur $N_c$.

L'invention sera mieux comprise à l'aide de la description suivante de la forme de réalisation préférée de la chaîne de régulation de l'invention, en référence aux dessins annexés, sur lesquels :
- la figure 1 représente schématiquement une chaîne de gulation de la vitesse du tambour d'une machine à lalinge;
- la figure 2A représente le signal impulsionnel de sortie du module de régulation de la chaîne de la figure 1 et la figure 2B représente la courbe de la tension secteur d'alimentation du moteur du tambour à réguler;
- la figure 3 représente le module de normage et de régulation de l'invention, de la chaîne de régulation de la figure 1;
- la figure 4 représente le module de la figure 3 dans une version encore simplifiée, et
- la figure 5 représente le sous-module de régulation du module de normage et de régulation de la chaîne de la fig.1.

La chaîne de régulation de l'invention, ici numérique, étant dans son ensemble et sa fonction identique à celle qui est représentée sur la figure 1, à l'exception du module de normage et de régulation, 80 et non plus 8, ce module va maintenant être décrit, d'abord dans sa fonction de normage, puis dans sa fonction de régulation.

Le module 80 comporte une mémoire RAM 12 qui contient une période de référence $T_{ref}$, adoptée arbitrairement et correspondant à une vitesse de rotation du tambour 1 par exemple de 100 tours par minute.

Le module 80 comporte une horloge 9 fournissant un train d'impulsions H à un compteur 11, et un registre 10. Le registre 10, initialisé par un nombre N, fourni par une mémoire RAM 14, reçoit sur son entrée le signal de période T' du tachymètre 6 et compte les fronts, par exemple montants, de ce signal qui décrémentent la valeur contenue dans le registre 10. Après N périodes T' du signal du tachymètre 6, c'est-à-dire quand, à l'arrivée du $(N+1)^è$ front, la valeur contenue dans le registre 10 devient 0, la sortie du registre 10 remet à zéro le compteur 11 par son entrée RAZ, la sortie du compteur 11 fournissant alors la durée NT' et le registre 10 étant réinitialisé par le contenu de la mémoire 14.

NT' est comparée à $T_{ref}$ dans un comparateur 13 dont la sortie est reliée à l'entrée d'incrémentation de la mémoire 14 de stockage du facteur N. En fait, une mémoire 61 est intercalée entre le compteur 11 et le comparateur 13, pour conserver la dernière valeur NT' jusqu'à ce que le compteur 11 en fournisse une nouvelle et éviter ainsi que la sortie du comparateur 13 ne change d'état à la remise à zéro du compteur 11.

Si on a la relation

$$NT' \geqq T_{ref}$$

la sortie du comparateur 13 n'est pas modifiée, pas plus que le contenu de la mémoire 14.

3

Si on a la relation

NT$'$ < T$_{ref}$

la sortie du comparateur 13 est modifiée pour incrémenter la valeur de la mémoire 14 d'une unité.

En conséquence, la portion du sous-module de normage 9-14 décrite jusqu'ici permet, par rapport à la période de référence choisie, de compter le nombre suffisant N de fronts du signal de période T$'$. En d'autres termes, cette portion de sous-module de la chaîne permet d'ouvrir une fenêtre temporelle NT$'$ définie par la période de référence T$_{ref}$.

Quand le contenu de la mémoire 14 est incrémenté, cela signifie, en pratique, que le tambour ne tourne pas assez vite, 11 n'arrive jamais que le tambour tourne trop vite et qu'il faille donc décrémenter la valeur de la mémoire 14,

En effet, le tambour d'une machine à laver le linge ne peut être soumis qu'à trois régimes de vitesse : une vitesse de lavage, une vitesse de centrifugation et de répartition du linge à la surface du tambour et une vitesse d'essorage avec le linge réparti. Or, il n'est pas possible, par exemple, de passer de la vitesse de répartition à la vitesse de lavage sans arrêter le tambour, puisqu'il ne faut pas faire tourner le tambour à la vitesse de lavage sans eau, ce qui abimerait le linge, et que le remplissage en eau du tambour nécessite un certain temps. Le passage d'une vitesse supérieure à une vitesse inférieure s'effectue toujours avec un arrêt intermédiaire.

On remarquera donc ici que le contenu de la mémoire 14 n'est incrémenté qu'en phase d'accélération du moteur du tambour, en boucle ouverte, jamais en phase de régulation.

Le signal de consigne de période T, correspondant à des vitesses du tambour et de son moteur prédéterminées, est envoyé respectivement sur l'entrée positive et l'entrée négative de deux comparateurs 15, 16. L'entrée négative du compteur 15 et l'entrée positive du compteur 16 reçoivent respectivement les valeurs

$$\frac{T_{ref}}{N_c} \quad et \quad \frac{T_{ref}}{N_c-1}$$

sortant respectivement des diviseurs 17, 18, les valeurs $N_c$ et $N_c-1$ étant respectivement fournies par deux mémoires RAM 19, 20.

Les sorties des deux comparateurs 15, 16 sont respectivement reliées aux deux entrées d'une porte NON-ET (NAND) 21, dont la sortie est reliée à l'entrée d'un compteur 22 dont la sortie est reliée à l'entrée d'incrémentation de la mémoire 19 de stockage du facteur $N_c$.

Si on a les relations

$$\frac{T_{ref}}{N_c} \ll T < \frac{T_{ref}}{N_c-1}$$

c'est-à-dire si les deux sorties des comparateurs 15, 16 sont positives, la sortie de la porte NAND 21 est au niveau bas, de par le tableau de vérité d'une porte NAND, et la valeur contenue dans le compteur 22 n'est pas modifiée,

Sinon, la valeur du compteur 22 est incrémentée d'une unité, et donc celles des mémoires 19, 20 également,

En fait, on compare la période de consigne T et la période de référence T$_{ref}$ pour, si la consigne est plus petite que la référence, la multiplier dans un multiplicateur 23 par le nombre entier $N_c$ le plus petit possible, grâce au comparateur 16, avant de la comparer à la période multipliée du tachymètre et obtenir l'écart de régulation.

En d'autres termes, la dernière portion du sous-module de normage décrite 15-23 permet d'ouvrir virtuellement une fenêtre temporelle de consigne $N_c$T, définie par la période de référence T$_{ref}$.

Au lieu de procéder exactement comme indiqué en référence à cette portion de chaîne 15-23, on peut se passer des diviseurs 17, 18 et du multiplicateur 23 pour, à la place, rechercher les valeurs correspondantes dans une table préétablie et peu encombrante,

L'écart de régulation $\epsilon_N$ = NT' - $N_c$T est obtenu à la sortie d'un soustracteur 24 et est envoyé, après validation, sur le sous-module de régulation 25 fournissant le signal S de commande de l'interrupteur 5,

Dans un soustracteur 26, on compare N et $N_c$. Comme on a procédé au normage de l'écart par l'ouverture des fenêtres de normage NT' et $N_c$T, si les valeurs N et $N_c$ ne sont pas égales (N<$N_c$), c'est que la vitesse du tambour est loin de la bonne vitesse, Dans ce cas, le sous-module de régulation 25 élabore le signal de commande S à partir, non pas de l'écart $\epsilon_N$, mais d'un écart maximal $\epsilon_{max}$ prédéterminé, fourni par une mémoire RAM 27, après basculement d'un commutateur 28 commandé par le soustracteur 26. Si N = $N_c$ la régulation s'effectue à partir de $\epsilon_N$ fourni par l'ensemble de la chaîne de normage 9-24. C'est la validation.

On notera que les entrées d'un amplificateur-inverseur 29 reçoivent respectivement les valeurs N et $N_c$ et si N est inférieure à $N_c$, la mémoire 14 est remise à zéro par l'amplificateur 29 et on modifie la période T de la consigne 7.

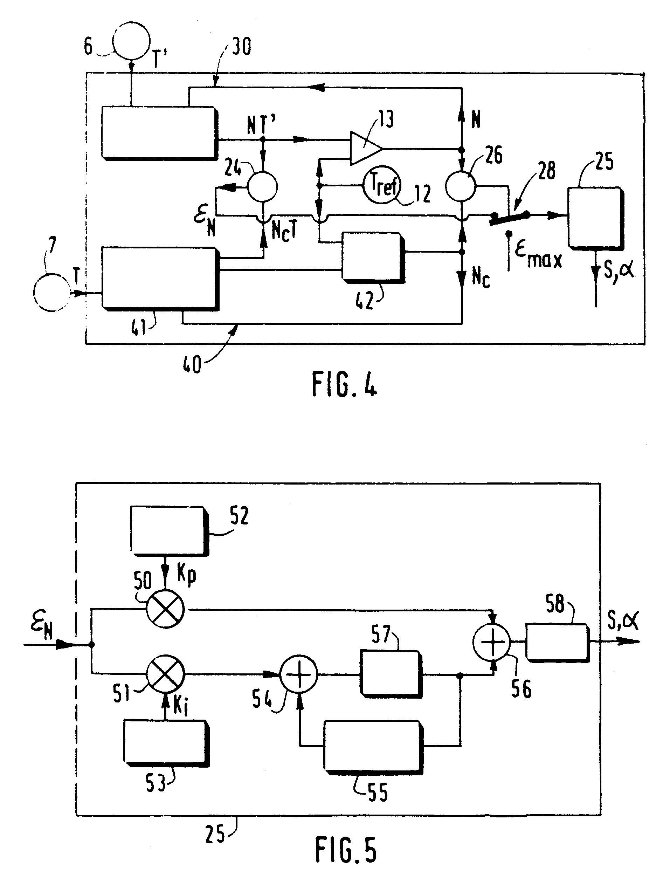

Schématiquement, on peut donc dire que la fonction normage de la chaîne de régulation est assurée comme indiqué ci-après, en référence à la figure 4.

Le module de normage comporte :
- des moyens 12 de stockage d'une période de référence $T_{ref}$,
- des moyens 30 recevant le signal de période T' du tachymètre 6, pour ouvrir une fenêtre temporelle de largeur NT' telle que

$$NT' \geq T_{ref}$$

- des moyens 40, recevant la période de consigne T, pour ouvrir une fenêtre temporelle de consigne de largeur $N_c$Ttelle que

$$\frac{N_c}{N_c - 1} \, T_{ref} \; > \; N_c T \; \geqslant \; T_{ref}$$

- des moyens 24 de détermination de l'écart

$$\epsilon_N = NT' - N_c T$$

- des moyens 26, 28 de validation de l'écart $\epsilon_N$.

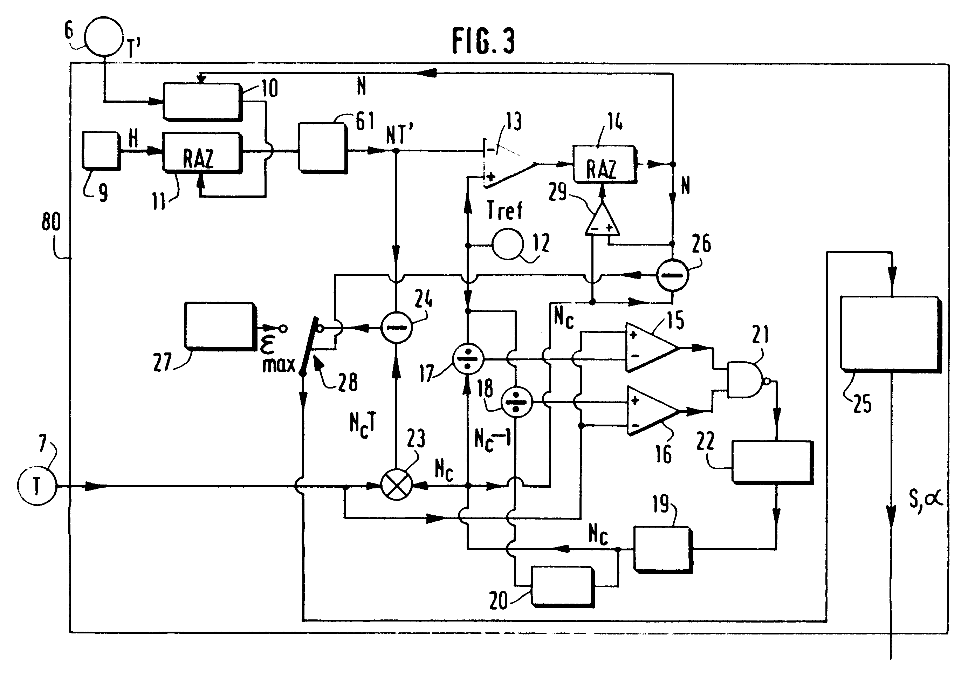

On notera que le bloc 42 de la figure 4 symbolise les comparateurs 15, 16 de la figure 3, le bloc 41, recevant la consigne T, symbolisant les autres éléments du module de normage 15-23,

Ainsi, le normage dans la chaîne de l'invention s'effectue simplement, par création d'une fenêtre de réception du signal tachymétrique et émission d'une consigne normée équivalant à la création d'une fenêtre d'émission de consigne, puis par comparaison des deux fenêtres, et ce par comparaison intermédiaire à une valeur de référence, ce procédé de normage s'apparentant ainsi quelque peu à une méthode de double pesée,

L'avantage du procédé de normage de l'invention est important.

La détermination de la période T' du signal tachymétrique, dans l'art antérieur, nécessitait deux mesures, au début et à la fin de la période, L'erreur sur la valeur mesurée de la période pouvait donc être égale au double de la période d'horloge. Le normage par multiplication pouvait en conséquence conduire à une erreur de mesure égale à la période d'horloge multipliée par le double du facteur multiplicatif de normage. Dans l'art antérieur, une erreur de mesure pouvait ainsi être injustement considérée comme un écart à corriger. Cet inconvénient n'existe plus dans la chaîne de l'invention,

Le fait de considérer une suite de plusieurs périodes du signal tachymétrique, au lieu d'une seule qui est ensuite multipliée par un facteur déterminé, rend négligeable toute erreur induite par la prise en compte prioritaire, sur le signal tachymétrique, de tout évènement extérieur concomitant, comme par exemple un top de synchronisation de la tension secteur, dès lors que cette priorité ne s'exerce que pendant une durée déterminée, courte par rapport à celle de la suite des périodes du signal tachymétrique, mais trop grande par rapport à la durée d'une seule de ces périodes.

Le sous-module de régulation 25 du module de normage et de régulation 80 est illustré sur la figure 5. Il transforme l'écart normé $\epsilon_N$ en angle de commande $\alpha$ défini plus haut et correspondant à une régulation proportionnelle $\alpha_p(t)$ et une régulation intégrale $\alpha_i(t)$.

$$\alpha = \alpha_p(t) + \alpha_i(t)$$

$\epsilon_N$ est multiplié dans deux multiplicateurs 50, 51 par des coefficients déterminés expérimentalement $K_p$, pour la régulation proportionnelle, et $K_i$ pour la régulation intégrale, stockés dans deux mémoires 52, 53.

Dans un additionneur 54, $\alpha_i(t_n)$ est additionné à la somme

$$\sum_{t_o}^{t_{n-1}} \alpha_i(t)$$

stockée dans une mémoire temporelle 55, avant que $\alpha_p(t_n)$ et

$$\left[ \alpha_i(t_n) + \sum_{t_o}^{t_{n-1}} \alpha_i(t) \right]$$

fournis respectivement par le multiplicateur 50 et l'additionneur 54 ne soient additionnés dans l'additionneur 56 qui fournit donc le signal S de commande de l'interrupteur 5.

De préférence, on interpose entre les additionneurs 54 et 56 et on dispose à la sortie de l'additionneur 56 deux circuits de bornage 57, 58 pour encadrer les valeurs de $\alpha$ par 0 et $\pi$.

Bien qu'il s'agisse ici d'une régulation numérique, elle ne se distingue pas fondamentalement d'une régulation classique analogique.

A titre d'exemple, on indiquera que le normage et la régulation de la chaîne de régulation de l'invention peuvent être mis en oeuvre dans un microprocesseur du type 6BHC05C2 de la Société Motorola.

**Revendications**

1. Chaîne de régulation de la vitesse d'un tambour (1) de machine à laver le linge, entraîné par un moteur (2,3) de type série comprenant un stator (3) dont le circuit d'alimentation en tension (4,5) comporte des moyens de commutation (5), comprenant des moyens (6) entraînés par le moteur (2), pour fournir un signal de période T' inversement proportionnelle à la vitesse du moteur (2), des moyens pour déterminer et normer l'écart entre ladite période T' et une période de consigne T et des moyens de régulation (25) fournissant, en réponse à l'écart normé $\epsilon_N$, un signal de commande desdits moyens de commutation (5), chaîne caractérisée par le fait que lesdits moyens de normage comprennent des moyens (12) de stockage d'une période de référence $T_{ref}$, des moyens (30) de création d'une fenêtre NT' de réception du signal des moyens (6) entraînés par le moteur, N étant un nombre entier, par comparaison avec la période de référence $T_{ref}$, des moyens (40) de création d'une fenêtre d'émission de consigne $M_cT$, $M_c$ étant un nombre entier, par comparaison avec la période de référence $T_{ref}$, des moyens (24) de détermination de l'écart normé $\epsilon_N$ entre les deux fenêtres, et des moyens de validation (26,28) agencés pour comparer les deux facteurs multiplicateurs de normage M, $N_c$ et, lorsqu'ils sont égaux envoyer sur les moyens de régulation (25) l'écart normé $\epsilon_N$, et lorsqu'ils sont différents, envoyer sur les moyens de régulation (25) un écart maximum $\epsilon_{max}$ prédéterminé.

2. Chaîne de régulation selon l'une des revendications 1, dans laquelle lesdits moyens (30, 40) de création des fenêtres NT' et $N_cT$ sont agencés pour créer respectivement des fenêtres de largeurs définies par les relations

$$NT' \geqq T_{ref}$$

$$\frac{N_c}{N_c-1} \; T_{ref} > N_cT \geqslant T_{ref}$$

3. Chaîne de régulation selon la revendication 2, dans laquelle les moyens de création de la fenêtre de réception NT′ comprennent un registre (10) agencé pour compter N fronts du signal de période T′, un comparateur (13) recevant sur ses entrées la valeur $T_{ref}$ et la largeur de la fenêtre NT′ et relié, par sa sortie, à l'entrée d'incrémentation d'une mémoire (14) de stockage du facteur N.

4. Chaîne de régulation selon l'une des revendications 2 et 3, dans laquelle les moyens de création de la fenêtre d'émission de consigne $N_cT$ comprennent deux comparateurs (15, 16), recevant l'un (15), sur son entrée positive, l'autre (16), sur son entrée négative, la valeur de la période T et, sur leurs autres entrées, respectivement la valeur

$$\frac{T_{ref}}{N_c} \quad et \quad \frac{T_{ref}'}{N_c-1}$$

et dont les sorties sont reliées respectivement aux deux entrées d'une porte NAND (21), dont la sortie est reliée à un compteur (22), lui-même relié, par sa sortie, à l'entrée d'incrémentation d'une mémoire (19) de stockage du facteur $N_c$.

## Claims

1. Chain for controlling the speed of a drum (1) of a washing machine, driven by a motor (2, 3) of the series type comprising a stator (3) whereof the voltage supply circuit (4, 5) comprises switching means (5), comprising means (6) driven by the motor (2), for supplying a signal of period T′ inversely proportional to the speed of the motor (2), means for determining and standardising the difference between said period T′ and a regulation period T and control means (25) supplying, in response to the standardised difference $\epsilon_N$, a signal for controlling said switching means (5), chain characterised by the fact that said standardising means comprise means (12) for storing a reference period $T_{ref}$ , means (30) for creating a window NT′ for receiving the signal from the means (6) driven by the motor, N being an integer , by comparison with the reference period $T_{ref}$, means (40) for creating a regulation transmission window $N_cT$, $N_c$ being an integer, by comparison with the reference period $T_{ref}$, means (24) for determining the standardised difference $\epsilon_N$, between the two windows, and validation means (26, 28) arranged in order to compare the two standardising multiplying factors N, $N_c$ and, when they are equal in order to send to the control means (25) the standardised difference $\epsilon_N$, and when they are different, to send to the control means (25) a predetermined maximum difference $\epsilon_{max}$.

2. Control chain according to Claim 1, in which said means (30, 40) for creating windows NT′ and $N_cT$ are arranged in order to create respectively windows of widths defined by the relationships

NT′$\geqq T_{ref}$

$$\frac{N_c}{N_c-1} \; T_{ref} > N_cT \geqslant T_{ref}$$

3. Control chain according to Claim 2, in which the means for creating the receiving window NT' comprise a register (10) arranged in order to count N fronts of the signal of period T', a comparator (13) receiving at its inputs the value $T_{ref}$ and the width of the window NT' and connected, by its output, to the incrementation input of a memory (14) for storage of the factor N.

4. Control chain according to one of Claims 2 and 3, in which the means for creating the regulation transmission window $N_cT$ comprise two comparators (15, 16), one (15) receiving, at its positive input, the other (16) receiving, at its negative input, the value of the period T and, at their other inputs, respectively the value

$$\frac{T_{ref}}{N_c} \quad and \quad \frac{T_{ref}}{N_c - 1},$$

and whereof the outputs are respectively connected to the two inputs of a NAND gate (21), whereof the output is connected to a counter (22), itself connected, by its output, to the incrementation input of a memory (19) for storing the factor $N_c$.

## Patentansprüche

1. Geschwindigkeitsregelungskette einer Waschmaschinentrommel (1), die von einem Reihenschlußmotor (2, 3) angetrieben wird, der einen Stator (3) enthält, dessen Speisestromkreis (4, 5) Schaltmittel (5) umfaßt, die vom Motor (2) angetriebene Mittel (6) umfassen, um ein zur Geschwindigkeit des Motors (2) umgekehrt proportionales Periodensignal T' zu liefern, Mittel, um die Differenz zwischen der besagten Periode T' und einer Sollperiode T zu bestimmen und zu normieren, und Regelungsmittel (25), welche als Reaktion auf die normierte Differenz $\epsilon_N$, ein Steuersignal für die besagten Schaltmittel (5) liefert, Kette dadurch gekennzeichnet, daß die besagten Normierungsmittel Mittel zum Speichern (12) einer Referenzperiode $T_{ref}$ umfassen, Mittel (30) zur Bildung eines Empfangsfensters NT' für das Signal der vom Motor angetriebenen Mittel (6), wobei N eine ganze Zahl ist, durch Vergleich mit der Referenzperiode $T_{ref}$, Mittel (40) zur Bildung eines Ausgabefensters für einen Sollwert $N_cT$, wobei $N_c$ eine ganze Zahl ist, durch Vergleich mit der Referenzperiode $T_{ref}$, Mittel (24) zur Bestimmung der normierten Differenz $\epsilon_N$ zwischen den beiden Fenstern, und Freigabemittel (26, 28), um die beiden Normierungs-Multiplikationsfaktoren N, $N_c$ zu vergleichen und um - wenn diese gleich groß sind - an die Regelungsmittel (25) die normierte Differenz $\epsilon_N$, zu übertragen und um - wenn sie verschieden groß sind - an die Regelungsmittel (25) eine vorbestimmte Maximaldifferenz $\epsilon_{max}$ zu übertragen.

2. Regelungskette gemäß Anspruch 1, bei welcher die besagten Mittel (30, 40) zur Bildung der Fenster NT' und $N_cT$ so beschaffen sind, daß Fenster mit Breiten gebildet werden, welche durch die Verhältnisse

NT' $\geq T_{ref}$

$$\frac{N_c}{N_c - 1} \quad T_{ref} > N_cT \gg T_{ref}$$

bestimmt werden.

3. Regelungskette gemäß Anspruch 2, bei welcher die Mittel zur Bildung des Empfangsfensters NT' ein Register (10) zum Zählen von N Flanken des Periodensignals T' enthalten, wobei ein Komparator (13) an seinen Eingängen den Wert $T_{ref}$ und die Breite des Fensters NT' empfängt und welcher über seinen Ausgang mit dem Inkrementationseingang eines Speichers (14) für den Faktor N verbunden ist.

4. Regelungskette gemäß einem der Ansprüche 2 und 3, bei welcher die Mittel zur Bildung des Sollwertausgabefensters $N_cT$ zwei Komparatoren (15, 16) umfassen, welche, einer (15) an seinem positiven Eingang, der andere (16) an seinem negativen Ausgang, den Wert der Periode T empfangen und an ihren anderen Eingängen den Wert

$$\frac{T_{ref}}{N_C} \quad und \quad \frac{T_{ref}'}{N_C-1}$$

und deren Ausgänge mit den beiden Eingängen eines NAND-Gatters (21) verbunden sind, dessen Ausgang mit einem Zählwerk (22) verbunden ist, welches selbst über seinen Ausgang mit dem Inkrementationseingang eines Speichers (19) für den Faktor $N_c$ verbunden ist.

EP 0 354 095 B1

FIG.1

FIG.2A

FIG.2B

10

FIG.3

EP 0 354 095 B1

FIG. 4

FIG.5